# EUROPEAN PATENT APPLICATION

(11) **EP 0 990 982 A1**
(43) Date of publication of application: **05.04.2000**
(21) Application number: 99118707.1
(22) Date of filing: 22.09.1999
(51) Int. Cl.: G06F 7/58

(54) **Random-Number generation using a plurality of clock signals**

(30) Priority: 28.09.1998 JP 27365898
(71) Applicant: NEC CORPORATION, Tokyo (JP)
(72) Inventor: Hamasako, Shuki, NEC IC Microcomputer Systems, Ltd, Kawasaki-shi, Kanagawa (JP)
(74) Representative: Betten & Resch

(57) **Abstract**

A random-number generating apparatus generates n (n is an integer greater than 2) voltages with n resistance elements from a predetermined voltage generate by one driving power source and individually supplies the n voltages to n clock generating circuits to generate clock signals of n frequencies. One clock latch circuit simultaneously latches the clock signals of a predetermined frequency and sequentially outputs n binary data as one numeric value of n bits. The sequentially outputted numeric values are random-numbers and have an extremely high randomness since they are generated based on relationship between the n clock frequencies and the one latch frequency.

## Description

### BACKGROUND OF THE INVENTION

### 1. Field of the Invention:

The present invention relates to a method and apparatus for generating random-numbers (random noise), and more particularly to a random-number generating method and apparatus for use in evaluating performance of a noise correcting circuit.

### 2. Description of the Related Art:

Noise correcting circuits such as correcting LSI (Large Scale Integration) have been used conventionally in communication devices for correcting signal noise. A random-number generating apparatus is used as a circuit evaluating apparatus for evaluating the performance of such a noise correcting circuit.

Since a noise correcting circuit corrects a signal which has noise inserted thereinto to a proper state, a circuit evaluating apparatus utilizes random-numbers generated by a random generating apparatus as the noise for insertion into signals. Since a random-number generating apparatus used by a circuit evaluating apparatus or the like repeatedly generates pseudo random-numbers according to inputted clock signals, the random-number generation is usually formed using a shift register.

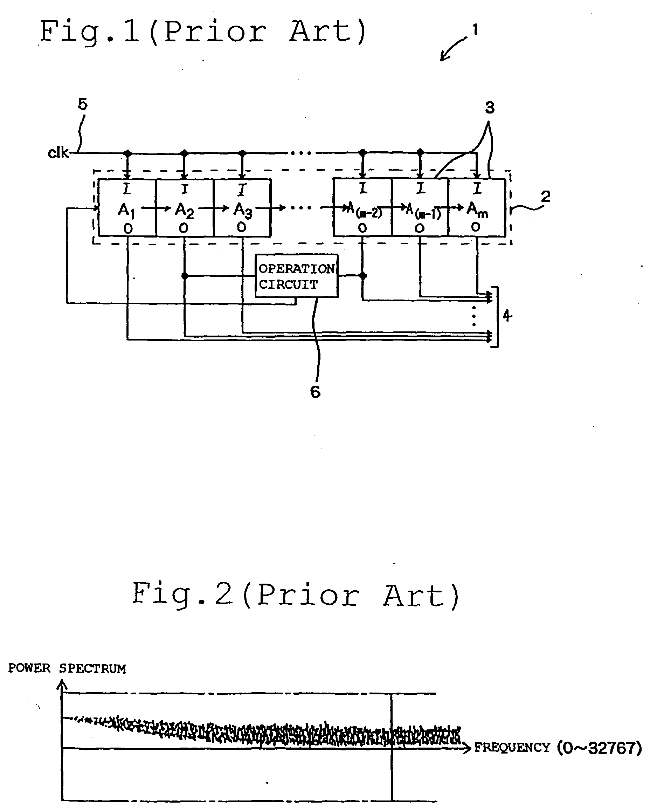

A prior art example of such a random-number generating apparatus will be hereinafter described with reference to Fig. 1.

Random-number generating apparatus 1 illustrated herein comprises, as its primary component, a shift register 2 which includes m register circuits 3 connected in series.

M register circuits 3 respectively have output terminals 0 thereof connected in parallel to a bit random-number output terminals 4, and control terminals I thereof connected in common to one clock input terminal 5.

Output terminals O of specific two register circuits 3 in shift register 2 are connected to a pair of input terminals of operation circuit 6 in the form of an XOR circuit. This operation circuit 6 has one output terminal connected to input terminal I of first register circuit 3 of shift register 2.

Random-number generating apparatus 1 thus configured repeatedly generates pseudo random-numbers corresponding to inputted clock signals. Specifically, since m register circuits 3 of shift register 2 individually hold binary data, and the m binary data are shifted one by one each time a clock signal is inputted, the m binary data are outputted in parallel to random-number output terminal 4 as an m-digit binary number.

At this time, since two binary data held in two register circuits 3 are XORed at operation circuit 6 and inputted to first register circuit 3, an m-digit binary number outputted to random-number output terminal 4 is changed each time a clock signal is inputted, thereby repeatedly generating pseudo random-numbers.

However, since the random-numbers thus generated are obtained by shifting the binary data of the previous numeric value by one and inserting only one new binary data at the head, the random-numbers have a high correlation with the previous numeric values and a low randomness.

For example, when random-numbers are generated assuming that m=15 and a power spectrum for frequency components is derived by performing fast Fourier transform for the random-number series, it can be seen that the power spectrum does not have a uniform distribution and has unevenness with respect to the frequency as shown in Fig. 2.

As a result, even when the aforementioned random-number generating apparatus 1 is used for a circuit evaluating device, it can not insert various types of noise into signals inputted to a noise correcting circuit under evaluation for causing unevenness in noise to be inserted into signals, thereby making it impossible to satisfactorily perform an evaluation test for the noise correction circuit.

Additionally, the aforementioned random-number generating apparatus 1 can not change the pattern of random-numbers generated. For this reason, even with the use of the aforementioned random-number generating apparatus 1 for a circuit evaluating device, it only can insert the same noise every time and can not perform various types of tests.

### SUMMARY OF THE INVENTION

It is an object according to the present invention to provide a method and apparatus for generating random-numbers which have a high randomness and easily changeable patterns with a simple configuration.

The random-number generating apparatus according to the present invention comprises clock generating means, clock latch means, and random-number output means.

The clock generating means generates n clock signals of mutually different frequencies which are simultaneously latched by the clock latch means at a predetermined frequency. The random-number output means provides the latched n binary data as one numeric value of n bits, which are random-numbers. The random-numbers are generated according to a relationship between the frequencies of the n clock signals and the frequency of the latch, exhibiting a higher randomness than the conventional random-numbers generated based on operation for binary data.

According to one embodiment according to the present invention, the clock generating means comprises n clock generating circuits and power supply means.

When the power supply means individually supplies n respective driving powers of mutually different voltages to the n clock generating circuits, the n clock generating circuits generate clock signals of frequencies corresponding to the voltages of the supplied driving powers, and the clock generating means therefore generates the n clock signals of mutually different frequencies. Since the n frequencies are generated from the n voltages which are analog elements, it is possible to reduce the correlation among the n frequencies to obtain a higher randomness for random-numbers. The n voltages are utilized to generate the n frequencies, so that the n clock generating circuits which generate clock signals of frequencies changing in correspondence with the voltage of the driving power may be of the same structure, allowing improved productivity of the random-number generating apparatus.

According to another embodiment of the present invention, the power supply means comprises one driving power source, at least n resistance elements, and power supply wires.

In this case, the one driving power source generates one driving power of a predetermined voltage from which n driving powers are generated of mutually different voltages by the at least n resistance elements. The n driving powers thus generated are individually supplied by the power supply wires to the n clock generating circuits. In this manner, the power supply means individually supplies the n driving powers of mutually different voltages to the n clock generating circuits. The n driving powers of mutually different voltages are generated from the one driving power by the resistance elements which are analog devices, thereby making it possible to reduce the correlation between the n voltages to obtain a higher randomness for random-numbers. Since it is possible to realize the power supply means for individually supplying the n driving powers of mutually different voltages to the n clock generating circuits with a simple structure, the productivity of the random-number generating apparatus can be improved.

It should be noted that various means referred to in the present invention may be any means as long as they are formed to realize the function. For example, the means can be implemented with dedicated hardware, a computer provided with a proper function with a program, a function implemented within a computer with a proper program, or a combination thereof.

Additionally, each of random-numbers referred to in the present invention is obtained by integrating a plurality of binary data into one numeric value and has the same meaning as so-called random noise. Furthermore, random-numbers referred to in the present invention may be periodically repeated pseudo sequences and actually need not be completely random.

The above and other objects, features and advantages according to the present invention will become apparent from the following description with reference to the accompanying drawings which illustrate examples according to the present invention.

### BRIEF DESCRIPTION OF THE DRAWINGS

Fig. 1 is a block diagram showing a random-number generating apparatus according to the prior art;
Fig. 2 is a graph showing a power spectrum for frequency components obtained by performing fast Fourier transform for random-number series;
Fig. 3 is a block diagram showing a random-number generating apparatus according to an embodiment of the present invention; and
Fig. 4 is a time chart showing correspondences between a plurality of clock signals and one latch signal.

### DETAILED DESCRIPTION OF THE PREFERRED EMBODIMENT

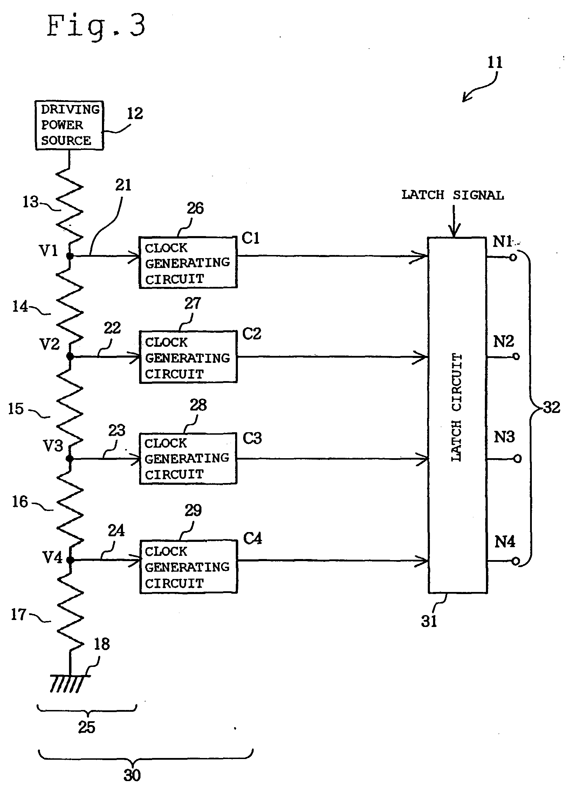

Referring now to Fig. 3, there is shown random-number generating apparatus 11 according to an embodiment of the present invention, comprises a driving power source 12, five resistance elements 13 to 17, a ground terminal 18, four power supply wires 21 to 24, four clock generating circuits 26 to 29, a latch circuit 31 serving as clock latch means, and random-number output unit 32 serving as random-number output means.

Driving power source 12 is connected to ground terminal 18 through resistance elements 13 to 17 connected in series. Resistance elements 13 to 17 have four contacts each connected to four power supply wires 21 to 24, forming power supply unit 25 serving as power supply means.

Driving power source 12 is a typical constant-voltage power supply and generates a predetermined driving voltage. Resistance elements 13 to 17 have different resistance values, and generate four different driving voltages V1, V2, V3, and V4, from a predetermined driving voltage generated by driving power source 12.

Respective power supply wires 21 to 24 transmit four driving voltages generated by resistance elements 13 to 17. Power supply unit 25 thus provides in parallel four different driving voltages V1, V2, V3, and V4.

Clock generating circuits 26 to 29 are connected to respective four power supply wires 21 to 24 of power supply unit 25, and form, in conjunction with power supply unit 25 clock generating unit 30 serving as clock generating means.

Clock generating circuits 26 to 29 are configured to have the same structure and generate clock signals of frequencies corresponding to the supplied driving voltages. Power supply unit 25 supplies respective driving voltages V1 to V4 to clock generating circuits 26 to 29. Clock generating unit 30 thus provides in parallel four clock signals C1, C2, C3, and C4 having different frequencies.

Clock generating circuits 26 to 29 are connected to a latch circuit 31 serving as clock latch means, whose four parallel output terminals form random-number output unit 32 serving as random-number output means.

Latch circuit 31 simultaneously latches four clock signals of frequencies C1 to C4 generated by the clock generating circuits 26 to 29 of a predetermined latch signal frequency. Random-number output unit 32 provides latched four binary data N1 to N4 as one numeric value of four bits.

Next, a generating of random-numbers using random-number generating apparatus 11 of the present embodiment will be described.

First, driving power source 12 generates a predetermined driving voltage from which four driving voltages V1, V2, V3, and V4 are generated by resistance elements 13 to 17.

Driving voltages V1 to V4 are then supplied to respective clock generating circuits 26 to 29 through power supply wires 21 to 24, which in turn generate clock signals of frequencies C1 to C4 corresponding to supplied driving voltages V1 to V4.

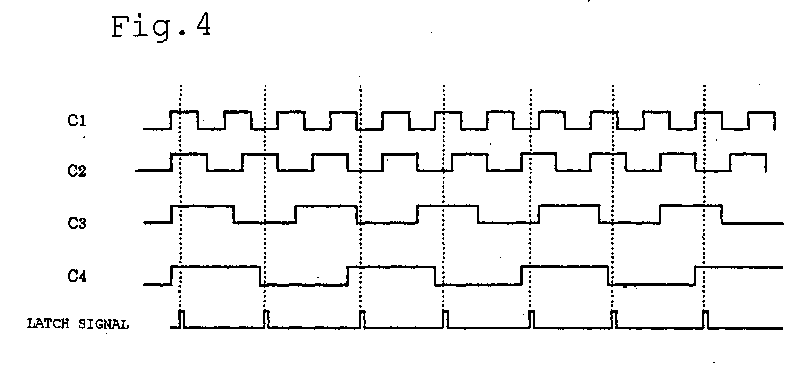

As shown in Fig. 4, latch circuit 31 simultaneously latches the four clock signals thus generated having frequencies C1 to C4 by the latch signal of predetermined frequency. As a result, one numeric value of 4 bits is produced from four binary data N1 to N4 thus latched, as shown in Table 1 below.

**(Table 1)**

| | | | | | | | |
|---|---|---|---|---|---|---|---|
| N1 | 1 | 0 | 0 | 1 | 0 | 1 | 1 |
| N2 | 1 | 1 | 0 | 0 | 1 | 1 | 0 |
| N3 | 1 | 0 | 0 | 1 | 0 | 0 | 1 |
| N4 | 1 | 0 | 1 | 0 | 1 | 0 | 1 |

As shown in Table 1 above, The numeric values of 4 bits sequentially produced by random-number generating apparatus 1 are random-numbers. Since the random-numbers are generated based on the relationship among frequencies C1 to C4 of the four clock signals and the frequency of the latch signal, they have a higher randomness than the conventional random-numbers generated by operation for binary data.

The use of random-number generating apparatus 11 of the present embodiment for a circuit evaluating device (not shown), allows extremely random noise to be inserted into proper signals using random-numbers generated by random-number generating apparatus 11, thus making it possible to satisfactorily perform an evaluation test for an error correcting LSI (not shown).

Also, in random-number generating apparatus 11 of the present embodiment, four driving voltages V1 to V4 have a low correlation, because these are generated by resistance elements 13 to 17 which are analogue devices from one driving voltage generated by one driving power source 12.

Additionally, since four frequencies C1 to C4 are generated from four driving voltages V1 to V4 thus generated, the four frequencies C1 to C4 also have a low correlation. As a result, four binary data N1 to N4 forming random-numbers have a sufficiently low correlation and the resulting random-numbers have a high randomness.

Besides, in random-number generating apparatus 11 of the present embodiment, four driving voltages V1 to V4 are supplied to respective four clock generating circuits 26 to 29 in order to generate clock signals at four frequencies C1 to C4 as previously explained. Accordingly clock generating circuits 26 to 29 may be of the same structure to allow the same components to be used as circuit elements, thereby easily implementing random-number generating apparatus 11.

It should be noted that although the aforementioned embodiment illustrates clock generating circuits 26 to 29, the number of clock generating circuits may be changed as desired as long as it is two or more.

Also, although the aforementioned embodiment illustrates of resistance elements 13 to 17 of different resistance values, a plurality of resistance elements may have the same resistance value. When a plurality of resistance elements have the same resistance value, the productivity of random-number generating apparatus is improved since the same components can be used as circuit elements although random-numbers have a lower randomness.

It should be noted that when the resistance values of the plurality of resistance elements 13 to 17 are different, the productivity of random-number generating apparatus 11 is reduced but random-numbers have an improved randomness. Accordingly, in deciding whether resistance elements 13 to 17 should have the same or different resistance values, it is desirable to make a selection after considering the performance required for a random-number generating apparatus and prices.

Additionally, the aforementioned embodiment illustrates that a plurality of resistance elements 13 to 17 are fixed resistors and random-numbers are repeatedly generated with a fixed pattern. However, the pattern of random-numbers to be generated may be changed using variable resistors as such resistance elements, or the pattern of random-numbers may be changed by changing a voltage generated by driving power source 12.

While a preferred embodiment according to the present invention has been described using specific terms, such description is for illustrative purposes only, and it is to be understood that changes and variations may be made without departing from the spirit or scope of the following claims.

## Claims

1. A method of generating random-numbers, comprising the steps of:
generating n (n is an integer greater than 1) clock signals of mutually different frequencies;
latching simultaneously the n clock signals at a predetermined frequency; and
providing the latched n binary data as one numeric value of n bits.

2. A method of generating random-numbers, comprising the steps of:
generating n (n is an integer greater than 1) clock signals of mutually different frequencies corresponding to n driving powers of mutually different voltages;
latching simultaneously the n clock signals at a predetermined frequency; and
providing the latched n binary data as one numeric value of n bits.

3. A method of generating random-numbers, comprising the steps of:
generating one driving power of a predetermined voltage;
generating n driving powers of mutually different voltages from the one driving power of a predetermined voltage;
generating n (n is an integer greater than 1) clock signals of mutually different frequencies corresponding to the n driving powers of mutually different voltages;
latching simultaneously the n clock signals at a predetermined frequency; and
providing the latched n binary data as one numeric value of n bits.

4. A random-number generating apparatus comprising:
clock generating means for generating n (n is an integer greater than 1) clock signals of mutually different frequencies;
clock latch means for simultaneously latching the n clock signals generated by said clock generating means at a predetermined frequency; and
random-number output means for providing the n binary data latched by said clock latch means as one numeric value of n bits.

5. The apparatus according to claim 4, wherein said clock generating means includes:
n clock generating circuits for generating clock signals of a frequency corresponding to a voltage of a supplied driving power; and
power supply means for individually supplying n driving powers of mutually different voltages to said n clock generating circuits.

6. The apparatus according to claim 5, wherein said power supply means includes:
one driving power source for generating a driving power of a predetermined voltage;
n resistance elements to generate n driving powers of mutually different voltages from the one driving power of the predetermined voltage generated by said driving power source; and
power supply wires for individually supplying the n driving powers generated by said resistance elements to said n clock generating circuits.

7. A random-number generating apparatus comprising:
a clock generating unit for generating n (n is an integer greater than 1) clock signals of mutually different frequencies;
a latch circuit for simultaneously latching the n clock signals generated by said clock generating unit at a predetermined frequency; and
a random-number output unit for providing the n binary data latched by said latch circuit as one numeric value of n bits.

8. The apparatus according to claim 7, wherein said clock generating unit includes:
n clock generating circuits for generating clock signals of a frequency corresponding to the voltage of a supplied driving power; and
a power supply unit for individually supplying n driving powers of mutually different voltages to said n clock generating circuits.

9. The apparatus according to claim 8, wherein said power supply unit includes:
one driving power source for generating a driving power of a predetermined voltage;
n resistance elements to generate n driving powers of mutually different voltages from the one driving power of the predetermined voltage generated by said driving power source; and
power supply wires for individually supplying the n driving powers generated by said resistance elements to said n clock generating circuits.

10. Computer program characterized by comprising: program code means for performing all the steps of any of claims 1 to 3 when said program is run on a computer.
